(19) Europäisches Patentamt
European Patent Office
Office européen des brevets

(11) Veröffentlichungsnummer : **0 133 872**
**B1**

(12) # EUROPÄISCHE PATENTSCHRIFT

(45) Veröffentlichungstag der Patentschrift : **01.02.89**

(51) Int. Cl.⁴ : **H 04 B 3/14**, H 03 H 17/02

(21) Anmeldenummer : **84106018.9**

(22) Anmeldetag : **26.05.84**

(54) **Zeitdiskreter variabler Entzerrer.**

(30) Priorität : **18.08.83 DE 3329839**
**27.08.83 DE 3331006**

(43) Veröffentlichungstag der Anmeldung : **13.03.85 Patentblatt 85/11**

(45) Bekanntmachung des Hinweises auf die Patenterteilung : **01.02.89 Patentblatt 89/05**

(84) Benannte Vertragsstaaten : **AT FR GB NL**

(56) Entgegenhaltungen :
**US-A- 2 096 027**
**US-A- 4 061 905**

(73) Patentinhaber : **ANT Nachrichtentechnik GmbH**
**Gerberstrasse 33**
**D-7150 Backnang (DE)**

(72) Erfinder : **Scheuermann, Helmut, Dipl.-Ing.**
**Schöntaler Strasse 55**
**D-7150 Backnang (DE)**

(74) Vertreter : **Wiechmann, Manfred, Dipl.-Ing.**
**ANT Nachrichtentechnik GmbH Gerberstrasse 33**
**Postfach 11 20**
**D-7150 Backnang (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

In der Technik (z. B. Tonstudiotechnik ; Tiefen- und Höhenbeeinflussung, Präsenzfilter) stellt sich häufig das Problem ausgehend von einem Grunddämpfungsgang hierzu symmetrische Dämpfungscharakteristika einzustellen (Fächercharakteristik). Dabei soll die Abweichung vom Grunddämpfungsverlauf, der nicht notwendigerweise konstant zu sein braucht, zu größeren und kleineren Dämpfungswerten hin symmetrisch sein ; weiterhin soll die Fächerung streng proportional zur « Berandung » erfolgen. In der Fig. 1 ist dies schematisch dargestellt.

Der Erfindung liegt die Aufgabe zugrunde, einen zeitdiskreten variablen Entzerrer der im Oberbegriff des Patentanspruches 1 genannten Art anzugeben, der mit möglichst wenigen Parameterveränderungen eine zu einer Grunddämpfung symmetrische Veränderung der Dämpfungscharakteristik ermöglicht.

Der Entzerrer soll dabei für zeitdiskrete Signalverarbeitung die bereits erwähnten Eigenschaften des Bode-Entzerrers aufweisen.

Gelöst wird dies durch die im Patentanspruch 1 angegebenen Merkmale.

Die erfindungsgemäße Lösung geht von den Prinzipien der Wellendigitalfilter aus wie sie aus der Literaturstelle [4] und aus DE-OS 20 27 303 bekannt sind. Als analoges Referenzfilter dient z. B. die bekannte Bode-Entzerrer-Struktur nach Fig. 2 gemäß US-Patent 20 96 027, Fig. 11.

Dabei ist M ein reflexionsfreier Hilfsvierpol mit dem Wellenwiderstand $R_o$ und $a = e\, a_{Bo}$, wobei $a_{Bo}$ das Niveau der Grunddämpfung in Neper gemäß Fig. 1 angibt. Der reflexionsfreie Hilfsvierpol werde z. B. durch sein Brücken-Impedanzen $Z_1$ und $Z_2$ gemäß Fig. 3 dargestellt (vgl. Literaturstelle [3]). Der Hilfsvierpol gemäß der Fig. 3 sei mit dem variablen ohmschen Widerstand $R_v$ am Ausgangstor 4 abgeschlossen. Da die Brückenimpedanzen $Z_1$ und $Z_2$ zueinander dual sind, läßt sich die Transmittanz vor Tor 3 nach Tor 4 bei Anpassung (d. h. $R_v = R_o$) durch $S_{43} = 1/2\ (S_1 - S_2) = S_1 = S$ ausdrücken. Hierbei ist

$$S_i = \frac{Z_i - R_0}{Z_i + R_0}$$

mit i = 1, 2. Bei Abschluß an Tor 4 mit $R_v$ gilt für die Reflektanz an Tor 3 : $S_{33} = \beta S_{43} = \beta S$, wobei $\beta$ zwischen $-1$ und $+1$ Werte annehmen kann.

Für $R_v = 0$ (Kurzschluß) wird $\beta = -1$
$R_v = R_o$ (Anpassung) wird $\beta = 0$
$R_v = \infty$ (Leerlauf) wird $\beta = +1$.

Nach dem Wellendigitalfilter-Prinzip gemäß [4] erhalten wir damit anstelle des Referenzfilters nach Figur 2 die für zeitdiskrete Realisierung geeignete Structur, die in Fig. 4 schematisch dargestellt ist. S stellt die Reflektanz der Impedanz $Z_1$ (Fig. 3) dar. II ist ein Dreitor-Paralleladaptor mit einer Wellensenke am Ausgang, und I ist ein Dreitor-Paralleladaptor (vgl. hierzu Literaturstelle [5]).

Ein Beispiel zeigt, wie der Entzerrer (Fig. 4) nach der Erfindung ausgestaltet sein kann :

Gegeben sei eine zeitkontinuierliche (analoge) Schaltung eines Bode-Entzerrers gemäß Fig. 2. Mit $R_o$ und $a = 2$ ergibt sich Fig. 5a. Die Brückenimpedanzen $Z_1$ und $Z_2$ seien gemäß Fig. 5b bzw. Fig. 5c angenommen. $\Psi$ sei die aus der Theorie der Wellendigitalfilter [4] bekannte Frequenzvariable gemäß der Beziehung $\Psi = j\varphi = j \tan \pi f/f_A$, wobei f die technische Frequenz und $f_A$ die Abtastfrequenz der zeitdiskreten Signalverarbeitung darstellt. Je nachdem welche Brückenimpedanz $Z_1$ (Fig. 5b) oder $Z_2$ (Fig. 5c) für die Dimensionierung der Reflektanz S (Fig. 4) zugrunde gelegt wird, erhält man die Schaltung nach Fig. 6 ($Z_1$) oder Fig. 7 ($Z_2$).

Die Symbole der Adaptoren I und IV in den Fig. 6 und 7 sind z. B. der Patentschrift DE-OS 20 27 303 entnommen. Dort ist auch das detaillierte Schaltbild angegeben. Die beiden Bausteine II und III bilden miteinander eine verzögerungsfreie Schleife. Aus diesem Grunde ist die angegebene Struktur nur für zeitdiskrete amplitudenkontinuierliche Signalverarbeitung geeignet.

Beide Schaltungen haben bezüglich der Betriebsdämpfung zueinander komplementäres Verhalten, wie dies in den Fig. 8 und 9 gezeigt ist. Die hier gezeigte Fächercharakteristik ist gemessen an einem Ausführungsbeispiel eines zeitdiskreten Bode-Entzerrers vom Grad 2 für $R_o = 1\ \Omega$, $R_L = R_C = 1$ und dem Koeffizienten $\beta$ als Scharparameter.

In der Fig. 10 ist ein zu Fig. 5a dualer Bode-Entzerrer dargestellt. Der zugehörige Entzerrer nach der Erfindung ist in Fig. 11 schematisch gezeigt.

Die Vorteile des Entzerrers nach der Erfindung gegenüber anderen variablen Entzerrern bestehen in folgendem : eine Bode-Entzerrer-Struktur kann jetzt für zeitdiskrete amplitudenkontinuierliche Signale benutzt werden, die Änderung des Frequenzganges ist durch Änderung nur eines Multiplizierer-Koeffizienten durchführbar, komplementäre Frequenzgänge unterscheiden sich nur durch das Vorzeichen dieses Koeffizienten, die Struktur eignet sich besonders gut zur automatischen Einstellung des Entzerrers an eine zu entzerrende Übertragungsstrecke, da nur ein Koeffizient eingestellt werden muß, für den ganzen Fächerbereich ist nur eine definierte Koeffizientenänderung notwendig, die zwischen $-1$ und $+1$ liegt, die Erfindung kann auch auf zeit- und wertekontinuierliche Signale angewendet werden.

Wie erwähnt, treten bei den beschriebenen Bode-Entzerrer-Strukturen nach der Theorie der Wellendigitalfilter verzögerungsfreie Schleifen auf. Diese sind mit digitaler Signal verarbeitung nicht realisierbar.

Ziel einer Ausführungsform der Erfindung ist es daher, einer Bode-Entzerrer-Struktur anzugeben, die für digitale Signalverarbeitung geeignet ist und bei der möglichst wenige Parameter verändert werden müssen, um die gewünschte Fächercharakteristik zu erreichen.

Dies läßt sich mit einem Entzerrer nach Anspruch 3 realisieren. Spezielle Schaltungsausführungen sind in den Merkmalen der Ansprüche 4-7 angegeben.

Fig. 12 zeigt Bausteinkonfigurationen, die bei der Bode-Entzerrer-Schaltung für zeitdiskrete amplitudenkontinuierliche Signale nach dem Wellendigitalfilter-Prinzip auftreten können. Die Schaltungen nach den Fig. 12.1 und 12.2 betreffen einen Bode-Entzerrer, bei dem eine Längsimpedanz mit einer widerstandskonstanten Brückenschaltung im Längszweig liegt. Die Fig. 12.1 stellt die Nachbildung der Parallelschaltung der bevorzugt ohmschen Längsimpedanz $2R_0$ des Bode-Entzerrers nach Fig. 5a mit dem ohmschen Querwiderstand $R_0$ von Fig. 5b dar. Entsprechend ist Fig. 12.2 die Nachbildung der Parallelschaltung von $2R_0$ (Fig. 5a) mit dem ohmschen Serienwiderstand $R_0$ von Fig. 5c. Mit β ist der Multiplizierer mit dem variablen Koeffizienten β bezeichnet, β ist also der Fächerparametor. Die Fig. 12.3 und 12.4 gelten sinngemäß für die duale Bode-Entzerrer-Schaltung (Fig. 10), bei welcher eine Querimpedanz mit der Brückenschaltung im Querzweig des Bode-Entzerrers liegt.

Anspruch 3 gibt Schaltungen an, mit der die in Fig. 12 angegebenen Bausteinkonfigurationen mit digitaler Signalverarbeitung realisiert werden können (die in Fig. 12 gezeigten Adaptoren 1 und 2 entsprechen den Adaptoren II bzw. III in der Beschreibung zu den Figuren 1 bis 11) ; es treten dabei keine verzögerungsfreien Schleifen auf.

Jede der in Fig. 12.1 bis 12.4 angegebenen Schaltungen läßt sich durch zehn verschiedene Schaltungskonfigurationen realisieren. Diese sind in Fig. 13a bis 13k angegeben. Die Dimensionierung der in Fig. 13 jeweils auftretenden Multipliziererkoeffizienten ${}^{(i)}\delta_j$ wird wie folgt vorgenommen (das hochgestellte i der Koeffizienten ${}^{(i)}\delta_j$ in Fig. 13 bezieht sich auf den jeweils vorliegenden Fall nach Fig. 12 :

$$ {}^{(1)}\alpha_1,\quad {}^{(1)}\alpha_3,\quad {}^{(2)}\alpha_1,\quad {}^{(2)}\alpha_3, $$

seien die nach der Theorie der Wellendigitalfilter 5 errechneten Koeffizienten gemäß Fig. 12.1 (hier beziehen sich die hochgestellten Koeffizienten 1 und 2 auf die Adaptoren 1 bzw. 2). Dann ist

$$ \delta_1 = \frac{({}^{(1)}\alpha_1 + {}^{(1)}\alpha_3 - 1)(1 - {}^{(2)}\alpha_1)\,\beta + 1 - {}^{(1)}\alpha_1}{A} \qquad (1) $$

$$ \delta_2 = \frac{{}^{(1)}\alpha_1\, {}^{(2)}\alpha_1\, {}^{(1)}\alpha_3\, {}^{(2)}\alpha_3\, \beta}{A^2} \qquad (2) $$

$$ \delta_3 = \frac{({}^{(2)}\alpha_1 + {}^{(2)}\alpha_3 - 1)(1 - {}^{(1)}\alpha_3)\,\beta + 1\, {}^{(2)}\alpha_3}{A} \qquad (3) $$

wobei

$$ A = 1 - \beta\,(1 - {}^{(1)}\alpha_3)(1 - {}^{(2)}\alpha_1)\,. \qquad (4) $$

Der Fächerparameter β ist variabel von — 1 bis + 1. Für die Koeffizienten nach Fig. 13 erhalten wird für die vier Fälle nach Fig. 12 :

$$ \text{Fall 1}:\quad {}^{(1)}\delta_1 = \delta_1,\quad {}^{(1)}\delta_2 = \delta_2,\quad {}^{(1)}\delta_3 = \delta_3 \qquad (5) $$

$$ \text{Fall 2}:\quad {}^{(2)}\delta_1 = \delta_1,\quad {}^{(2)}\delta_2 = -\delta_2,\quad {}^{(2)}\delta_3 = -\delta_3 \qquad (6) $$

$$ \text{Fall 3}:\quad {}^{(3)}\delta_1 = -\delta_1,\quad {}^{(3)}\delta_2 = \delta_2,\quad {}^{(3)}\delta_3 = -\delta_3 \qquad (7) $$

$$ \text{Fall 4}:\quad {}^{(4)}\delta_1 = -\delta_1,\quad {}^{(4)}\delta_2 = -\delta_2,\quad {}^{(4)}\delta_3 = -\delta_3 \qquad (8) $$

Fig. 14 zeigt (entsprechend Fig. 6) ein Beispiel für einen Bode-Entzerrer vom Grad 2, und zwar die ursprüngliche Schaltung für zeitdiskrete Signalverarbeitung. Dabei bewirken die Verzögerungsglieder T eine Verzögerung um den Kehrwert der Abtastrate. $R_C$ und $R_L$ sind die Torwiderstände gemäß der Theorie der Wellendigitalfilter [4]. Fig. 15 zeigt das zugehörige Ausführungsbeispiel mit dem Wellen-Zweitor nach Fig. 13.a, welches in Fig. 15 an die Stelle der Schaltungsteiles St der Fig. 14 getreten ist.

In Fig. 16 ist die Fächercharakteristik ($|\beta| \leq 1$) der Dämpfung für $R_L = R_C = 1\ \Omega$ dargestellt, wobei die jeweiligen Koeffizienten mit angegeben sind.

Die vorteile der Ausführungsform nach den Ansprüchen 3ff bestehen darin, daß

— eine digitale Signalverarbeitung möglich ist,

— der Bode-Entzerrer nach dem Prinzip der Wellendigitalfilter arbeitet, so daß keine Stabilitätsprobleme auftreten, d. h. für jedes $\beta \in [-1, +1]$ liegt ein stabiler Zustand vor,

— Zur Erzeugung der Fächercharakteristik müssen nur drei Koeffizienten verändert werden, und zwar unabhängig vom Gesamtgrad des Bode-Entzerrers. Dadurch wird die Zahl der abzuspeichernden Koeffizienten für einen variablen Entzerrer mit vielen Zwischenstufen erheblich reduziert.

In Betracht gezogene Literaturstellen :

[1] H.W. Schüßler, « Digitale Systeme zur Signalverarbeitung », Springer Verlag Berlin, Heidelberg, New York, 1973.

[2] H.W. Bode, « Variable Equalizers », B.S.T.J. April 1938, pp. 229-244.

[3] V. Belevitch, « Classical Network Theory », Holden-Day, San Francisco, 1968

[4] A. Fettweis, « Digital Filter Structures Related to Classical Filter Networks », AEÜ 25, Seite 79-89, 1971.

[5] A. Fettweis + K. Meerkötter, « On Adaptors for Wave Digital Filters », IEEE Transactions an Acoustics, Speech, and Signal Processing, Vol. ASSP-23, No. 6, Dec. 1975, Seiten 516 bis 525.

## Patentansprüche

1. Zeitdiskreter variabler Entzerrer nach dem Prinzip des Bode-Entzerrers mit einer widerstandskonstanten Brückenschaltung, die mit einem veränderbaren Widerstand ($R_v$) abgeschlossen ist, dadurch gekennzeichnet,

— daß die Reflektanz der mit dem Widerstand ($R_v$) abgeschlossenen widerstandskonstanten Brückenschaltung (M) nach dem Wellendigitalfilter-Prinzip durch die Serienschaltung einerseits eines Multiplizierers ($\beta$) mit einstellbarem Koeffizienten und andererseits der Reflektanz (S, Fig. 4 und 11) nur einer (Z1, Fig. 5b oder Z2, Fig. 5c) der beiden Brückenimpedanzen der Brückenschaltung (M) gebildet ist,

— daß bei einem Bode-Entzerrer, bei dem die widerstandskonstante Brückenschaltung (M) mit einer Längs- ($2R_o$, Fig. 5a) bzw. mit einer Querimpedanz ($R_o/a$, Fig. 10) in dessen Längs- bzw. Querzweig liegt, die Längsimpedanz ($2R_o$) durch einen Dreitor-Paralleladaptor (II, Fig. 6 und 7) bzw. die Querimpedanz ($R_o/a$) durch einen Dreitor-Serienadaptor (II', Fig. 11) ersetzt ist, wobei das entsprechende Wellentor des Dreitor-Parallel- (II) bzw. -Serienadaptors (II') mit derjenigen Reflektanz abgeschlossen ist, welche die Längs- bzw. Querimpedanz aufweist, und

— daß zwischen das Eingangs- (1, —1) und das Ausgangswellentor (2, —2) ein weiterer Dreitor-Adaptor geschaltet ist, von welchem der genannte Dreitor-Parallel- (II) bzw. -Serienadaptor (II') abzweigt und welcher als Dreitor-Serien- (I, Fig. 4) bzw. -Paralleladaptor (I', Fig. 11) ausgebildet ist.

2. Entzerrer nach Anspruch 1, dadurch gekennzeichnet, daß bei einer rein ohmschen Längs- ($2R_o$, Fig. 5a) bzw. Querimpedanz ($R_o/a$, Fig. 10) das entsprechende Wellentor des zuerst genannten Dreitor-Parallel- (II in den Figuren 6 und 7) bzw. -Serienadaptors (II', Fig. 11) mit einer Wellensenke (W) abgeschlossen ist.

3. Entzerrer nach Anspruch 1 oder 2, dadurch gekennzeichnet, daß der zuerst genannte, die Längsimpedanz ($aR_o$, Fig. 2) ersetzende Dreitor-Parallel- (II in Fig. 6 bzw. 1 in Fig. 12) bzw. der die Querimpedanz ($R_{o/a}$, Fig. 10) ersetzende -Serienadaptor (II' in Fig. 11), der Multiplizierer ($\beta$) und ein mit dem Multiplizierer ($\beta$) in Reihe geschalteter, in der in Serie zum Multiplizierer ($\beta$) liegenden Reflektanz (S) enthaltener dritter Dreitoradaptor (III in Fig. 6, III' in Fig. 7, 2 in Fig. 12) in der Weise durch ein Wellen-Zweitor (Fig. 13) ersetzt sind, daß die Wirkungsweise der ersetzten Schaltungsteile erhalten bleibt, wobei das Wellen-Zweitor mit einem Eingangs- und einem Ausgangstor versehen ist, welche jeweils eine Klemme für Eingangs- und eine für Ausgangssignale aufweisen, und wobei das Wellen-Zweitor zwei Wellentor-Querzweige und zwei Wellentor-Längszweige aufweist, welch letztere jeweils Signale von der Klemme für Eingangssignale des einen Tores über einen Verzweigungspunkt und nachfolgend einen der Addierer zu der Klemme für Ausgangssignale des anderen Tores führen, während die beiden Wellentor-Querzweige zueinander gegensinnig Signale von einem der Verzweigungspunkte des einen Wellentor-Längszweiges zu einem der Addierer des anderen Wellentor-Längszweiges führen, und wobei schließlich sowohl in wenigstens einem der beiden Wellentor-Längszweige als auch in wenigstens einem der beiden Wellentor-Querzweige jeweils ein Multiplizierer vorgesehen ist.

4. Entzerrer nach Anspruch 3, dadurch gekennzeichnet, daß das Wellen-Zweitor lediglich drei Multiplizierer aufweist.

5. Entzerrer nach Anspruch 3 oder 4, dadurch gekennzeichnet, daß in den beiden Wellentor-Querzweigen und in einem Wellentor-Längszweig jeweils ein Multiplizierer vorgesehen ist und der Multiplizierer des Wellentor-Längszweiges im Signalfluß vor, in oder nach demjenigen Abschnitt des Wellentor-Längszweiges angeordnet ist, der zwischen den Wellentor-Querzweigen liegt (Fig. 13b und h bzw. a und f bzw. c und g).

6. Entzerrer nach Anspruch 3, dadurch gekennzeichnet, daß den beiden Eingängen des am Ausgangstor liegenden Addierers jeweils ein Multiplizierer vorgeschaltet ist und der dritte Multiplizierer in einem Wellentor-Längszweig liegend mit nur einer Klemme ($a_1$, $b_1$) des Eingangstores verbunden ist (Fig. 13d, i).

7. Entzerrer nach Anspruch 3, dadurch gekennzeichnet, daß den beiden Abzweigungen des am Eingangstor liegenden Verzweigungspunktes je ein Multiplizierer nachgeschaltet ist und der dritte Multiplizierer in einem Wellentor-Längszweig liegend mit nur einer Klemme ($b_2$, $a_2$) des Ausgangstores verbunden ist (Fig. 13e, k).

## Claims

1. Time-discrete variable equaliser on the principle of the Bode equaliser with a constant-resistance bridge circuit which is terminated by a vari?bltor ($R_v$), characterised thereby,

— that the reflectance of the constant-resistance bridge circuit (M) terminated by the resistor ($R_v$) is formed on the principle of the digital wave filter by the series connection on the one hand of a multiplier (β) of settable co-efficient and on the other hand of the reflectance (S, Figs. 4 and 11) of only one (Z1, Fig. 5b or Z2, Fig. 5c) of both the bridge impedances of the bridge circuit (M),

— that in the case of a Bode equaliser, in which the constant-resistance bridge circuit (M) lies by a longitudinal impedance ($2R_o$, Fig. 5a) and by a transverse impedance ($R_o/a$, Fig. 10) respectively in the longitudinal and transverse branches thereof, the longitudinal impedance ($2R_o$) is replaced by a three-port parallel adaptor (II, Figs. 6 and 7) or the transverse impedance ($R_o/a$) is replaced by a three-port series adaptor (II', Fig. 11), wherein the corresponding wave port of the three-port parallel adaptor (II) and the three-port series adaptor (II') are respectively terminated with that reflectance which the longitudinal impedance and the transverse impedance display, and

— a further three-port adaptor, from which the named three-port parallel adaptor (II) or three-port series adaptor (II') branches off and which is constructed as three-port series adaptor (I, Fig. 4) or three-port parallel adaptor (I', Fig. 11), is connected between the input wave port (1, —1) and the output wave port (2, —2).

2. Equaliser according to claim 1, characterised thereby, that in the case of a purely resistive longitudinal impedance ($2R_o$, Fig. 5a) or transverse impedance ($R_o/a$, Fig. 10), the corresponding wave port of the first named three-port parallel adaptor (II in the Figs. 6 and 7) or three-port series adaptor (II', Fig. 11) is terminated by a wave sink (W).

3. Equaliser according to claim 1 or 2, characterised thereby, that the first named three-port parallel adaptor (II in Fig. 6 or 1 in Fig. 12) replacing the longitudinal impedance ($aR_o$, Fig. 2) or the three-port series adaptor (II' in Fig. 11) replacing the transverse impedance ($R_{o/a}$, Fig. 10), the multiplier (β) and a third three-port adaptor (III in Fig. 6, III' in Fig. 7, 2 in Fig. 12), which is connected in series with the multiplier (β) and contained in the reflectance (S) lying in series with the multiplier (β), are replaced in such a manner by a wave two-port (Fig. 13) that the manner of effect of the replaced circuit parts remains maintained, wherein the wave two-port is provided with an input port and an output port which each display a respective terminal for input signals and one for output signals and wherein the wave two-port displays two wave port transverse branches and two wave port longitudinal branches, which latter each conduct respective signals from the terminal for input signals of the one port by way of a branching point and subsequently one of the adders to the terminal for output signals of the other port, whilst both the wave port transverse branches conduct signals in mutually opposite sense from one of the branching points of the one wave port longitudinal branch to one of the adders of the other wave port longitudinal branch and wherein finally a respective multiplier is provided in at least one of both the wave port longitudinal branches as well as also in at least one of both the wave port transverse branches.

4. Equaliser according to claim 3, characterised thereby, that the wave two-port displays merely three multipliers.

5. Equaliser according to claim 3 or 4, characterised thereby, that a respective multiplier is provided in both the wave port transverse branches and in one wave port longitudinal branch and the multiplier of the wave port longitudinal branch is arranged in the signal flow in front of, in or behind that portion of the wave port longitudinal branch, which lies between the wave port transverse branches (Fig. 13b and h or a and f or c and g).

6. Equaliser according to claim 3, characterised thereby, that a respective multiplier is connected in front of both the inputs of the adder lying at the output port and the third multiplier, lying in a wave port longitudinal branch, is connected with only one terminal ($a_1$, $b_1$) of the input port (Fig. 13d, i).

7. Equaliser according to claim 3, characterised thereby, that a respective multiplier is connected behind both the branches of the branching point lying at the input port and the third multiplier, lying in a wave port longitudinal branch, is connected with only one terminal ($b_2$, $a_2$) of the output port (Fig. 13e, k).

## Revendications

1. Egalisateur variable discret dans le temps selon le principe de l'égalisateur de Bode comportant un circuit de pont à résistance constante fermé par une résistance variable ($R_v$), caractérisé,

— en ce que la réflectance du circuit de pont (M) à résistance constante, fermé par la résistance ($R_v$), est formée, selon le principe des filtres d'ondes numériques, par les circuits de série constitués d'une part d'un multiplicateur (β) à coefficient ajustable et d'autre part de la réflectance (S, figure 4 et 11) d'une seule (Z1, figure 5b ou Z2, figure 5c) des deux impédances de pont du circuit de pont (M).

— en ce que, dans le cas d'un égalisateur de Bode dans le cas duquel le circuit de pont à résistance constante (M) se trouve, avec une impédance longitudinale ($2R_o$, figure 5a) ou avec une impédance transversale ($R_o/a$, figure 10) dans sa branche longitudinale ou dans sa branche transversale, l'impédance longitudinale ($2R_o$) est remplacée par un adaptateur parallèle à trois portes (II, figures 6 et 7) ou bien l'impédance transversale ($R_o/a$) est remplacé par un adaptateur série à trois portes (II', figure 11), étant précisé que la porte d'ondes correspondante, de l'adaptateur parallèle à trois portes (II) ou de l'adaptateur série à trois portes (II'), est fermée par la même réflectance que celle que présentent l'impédance longitudinale ou l'impédance transversale et

— en ce qu'entre la porte d'ondes d'entrée (1, — 1) et la porte d'onde de sortie (2, — 2) est mis en circuit un autre adaptateur à trois portes d'où dérive l'adaptateur parallèle à trois portes (II) ou l'adaptateur série à trois portes (II') mentionné et qui est conçu comme adaptateur série à trois portes (I, figure 4) ou adaptateur parallèle à trois portes (I', figure 11).

2. Egalisateur selon la revendication 1, caractérisé en ce que dans le cas d'une impédance longitudinale ($2R_o$, figure 5a) ou transversale ($R_o/a$, figure 10) purement ohmique, le porte d'ondes correspondante de l'adaptateur parallèle à trois portes (II sur les figures 6 et 7) ou de l'adaptateur série à trois portes (II', figure 11) mentionné en premier lieu est fermé par un circuit bouchon (W).

3. Egalisateur selon la revendication 1 ou 2, caractérisé en ce que l'adaptateur parallèle à trois portes (II sur la figure 6 ou 1 sur la figure 12) remplaçant l'impédance longitudinale ($aR_o$, figure 2) ou l'adaptateur série à trois portes (II' sur la figure 11) remplaçant l'impédance transversale ($R_{o/a}$, figure 10), mentionné en premier lieu, le multiplicateur (β) et un troisième adaptateur à trois portes (III sur la figure 6, III' sur la figure 7, 2 sur la figure 12), monté en série avec le multiplicateur (β) et contenu dans la réflectance (S) montée en série avec le multiplicateur (β), sont remplacés par une porte d'ondes double (figure 13) de façon telle que le mode d'action des portions remplacées du circuit soit maintenu, étant précisé que la porte d'ondes double comporte une porte d'entrée et une porte de sortie qui présentent respectivement une borne pour des signaux d'entrée et une borne pour des signaux de sortie, et étant précisé que la porte d'ondes double présente deux branches transversales de porte d'ondes et deux branches longitudinales de porte d'ondes, ces dernières conduisant respectivement des signaux depuis la borne pour signaux d'entrée de l'une des portes, en passant par un point d'embranchement et ensuite par l'un des additionneurs, jusqu'à la borne pour signaux de sortie de l'autre porte, tandis que les deux branches transversales de porte d'ondes conduisent des signaux, à contresens l'une de l'autre, depuis l'un des points d'embranchement de l'une des branches longitudinales de porte d'ondes jusqu'à l'un des additionneurs de l'autre branche longitudinale de porte d'ondes, et étant précisé enfin qu'il est respectivement prévu un multiplicateur aussi bien dans au moins l'une des deux branches longitudinales de porte d'ondes que dans au moins l'une des deux branches transversales de porte d'ondes.

4. Egalisateur selon la revendication 3, caractérisé en ce que la porte d'ondes double ne présente que trois multiplicateurs.

5. Egalisateur selon la revendication 3 ou 4, caractérisé en ce que dans les deux branches transversales de porte d'ondes et dans une branche longitudinale de porte d'ondes il est respectivement prévu un multiplicateur ; et en ce que le multiplicateur de la branche longitudinale de porte d'ondes est disposé, dans le sens du passage du signal, devant, dans ou derrière le tronçon de la branche longitudinale de porte d'ondes qui se situe entre les branches transversales de porte d'ondes (figure 13b et h ou a et f ou c et g).

6. Egalisateur selon la revendication 3, caractérisé en ce qu'en amont des deux entrées de l'additionneur situé à la porte de sortie est respectivement monté un multiplicateur ; et en ce que le troisième multiplicateur situé dans une branche longitudinale de porte d'ondes n'est relié qu'à une borne ($a_1$, $b_1$) de la porte d'entrée (figure 13d, i).

7. Egalisateur selon la revendication 3, caractérisé en ce qu'en aval des deux embranchements du point d'embranchement situé à la porte d'entrée est respectivement monté un multiplicateur ; et en ce que le troisième multiplicateur situé dans une branche longitudinale de porte d'ondes n'est relié qu'à une borne ($b_2$, $a_2$) de la porte de sortie (figure 13e, k).

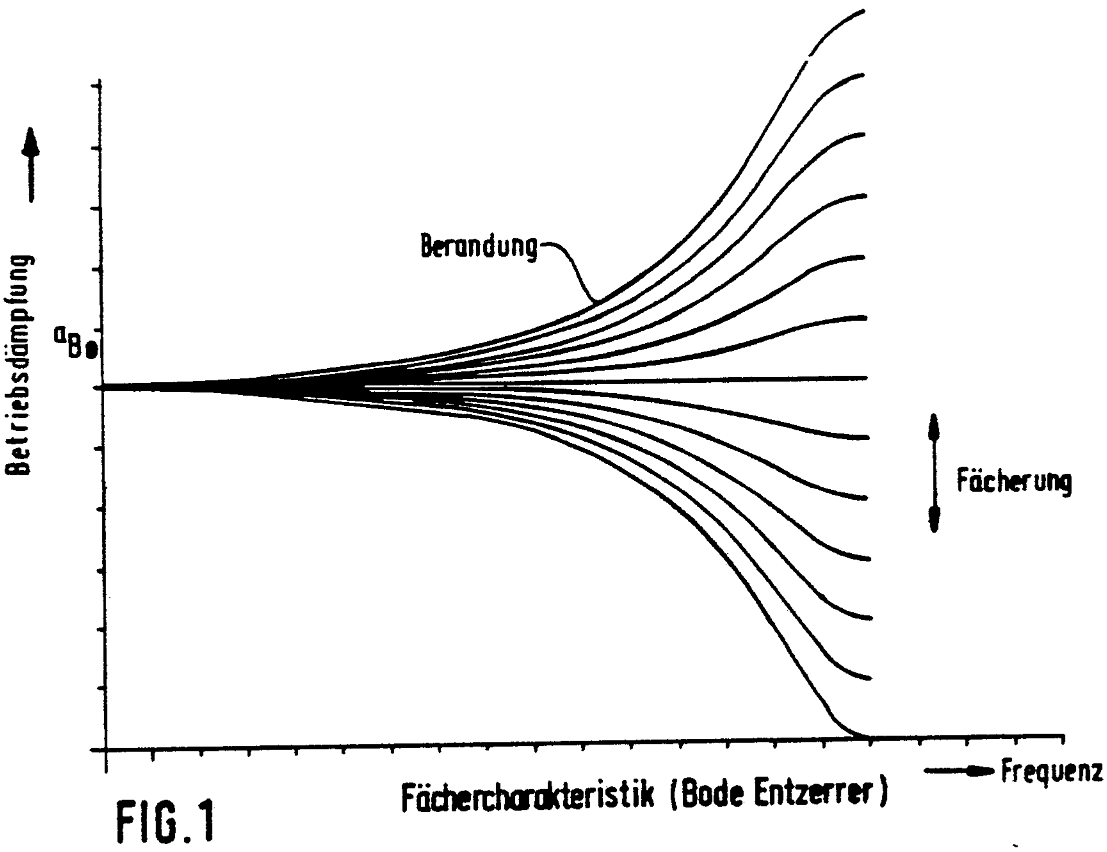
Betriebsdämpfung
$a_{Bo}$
Berandung
Fächerung
Frequenz
Fächercharakteristik (Bode Entzerrer)

FIG.1

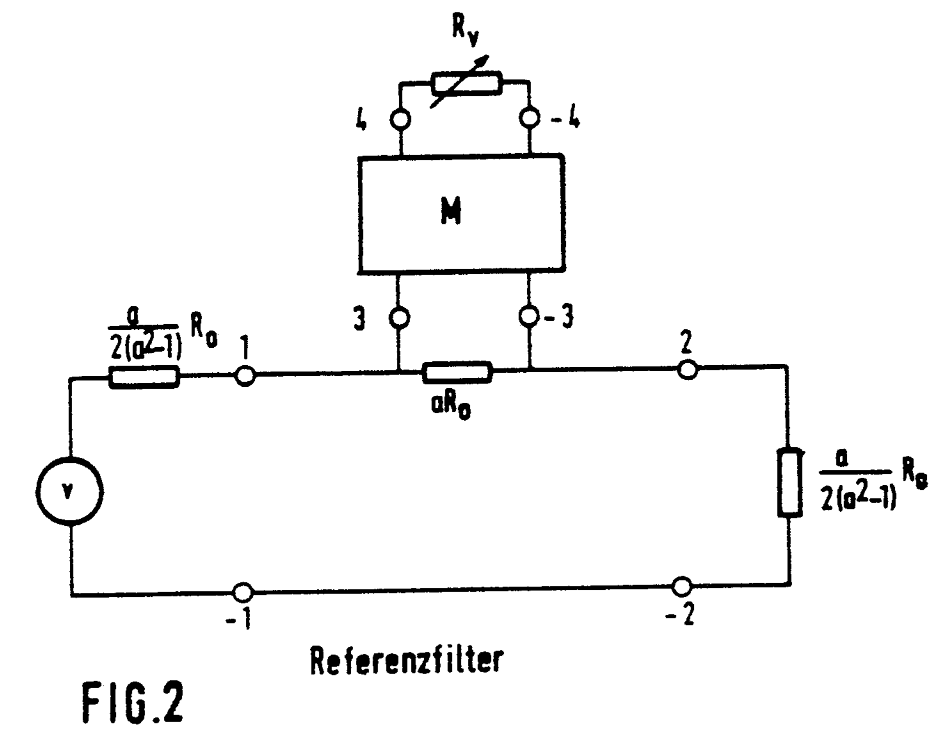
$R_v$
4
-4
M
3
-3
$\frac{a}{2(a^2-1)} R_o$
1
2
$aR_o$
V
$\frac{a}{2(a^2-1)} R_o$
-1
-2
Referenzfilter

FIG.2

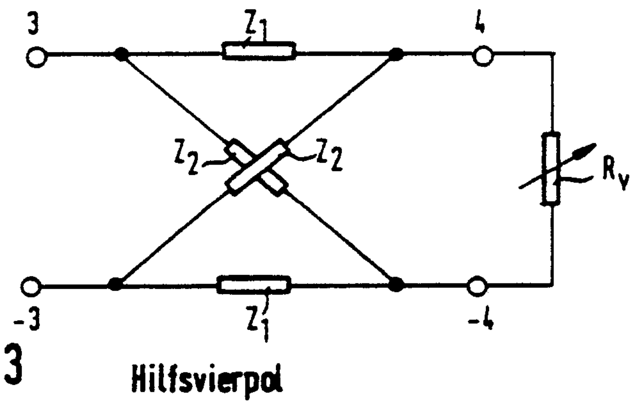


FIG.3 Hilfsvierpol

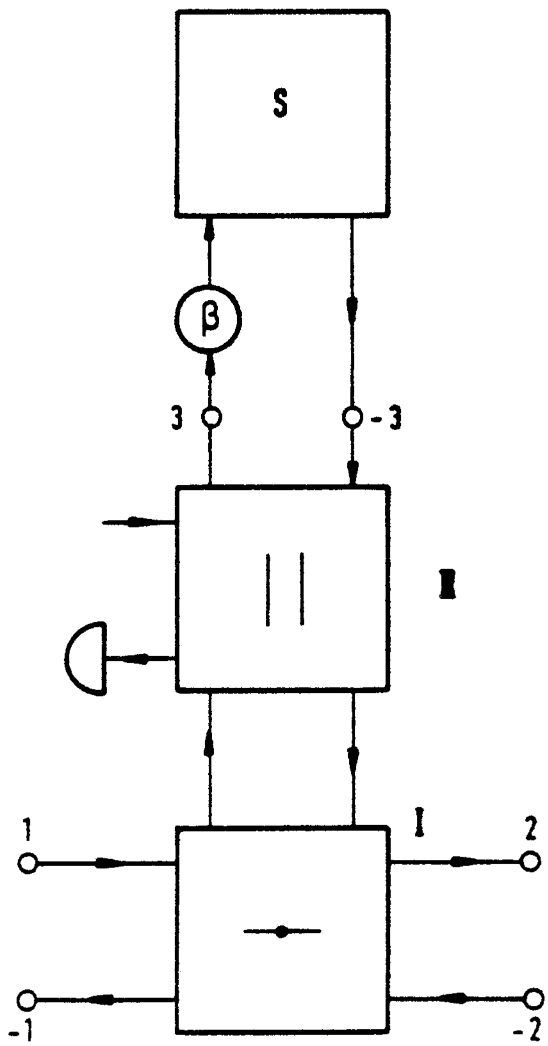


FIG.4

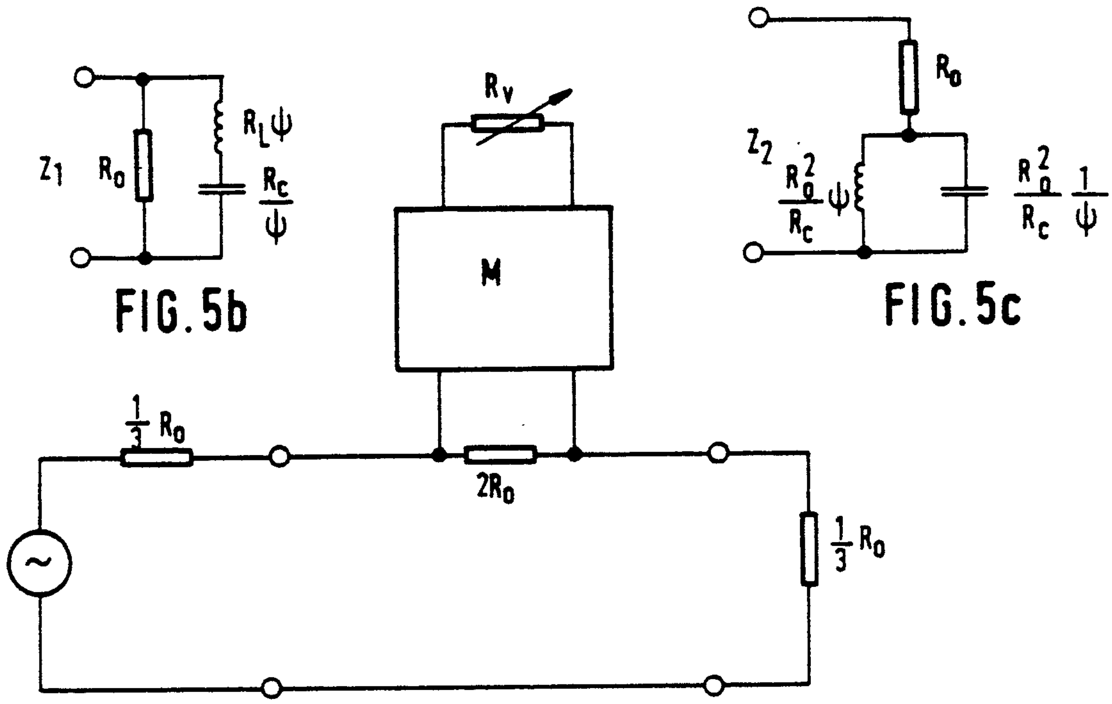


FIG.5b

FIG.5c

FIG.5a

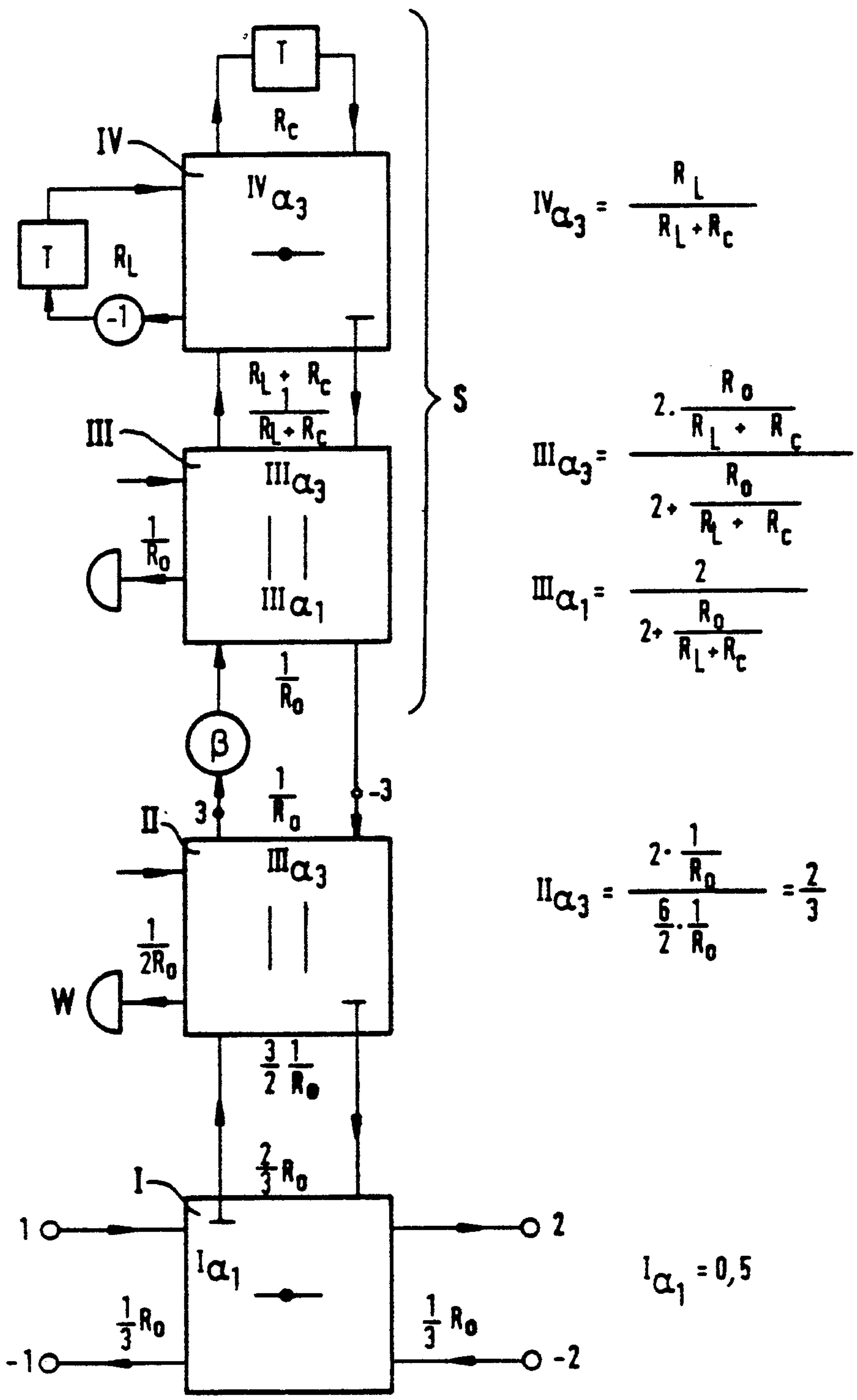


FIG. 6 Zeitdiskrete Schaltung ausgehend von $Z_1$

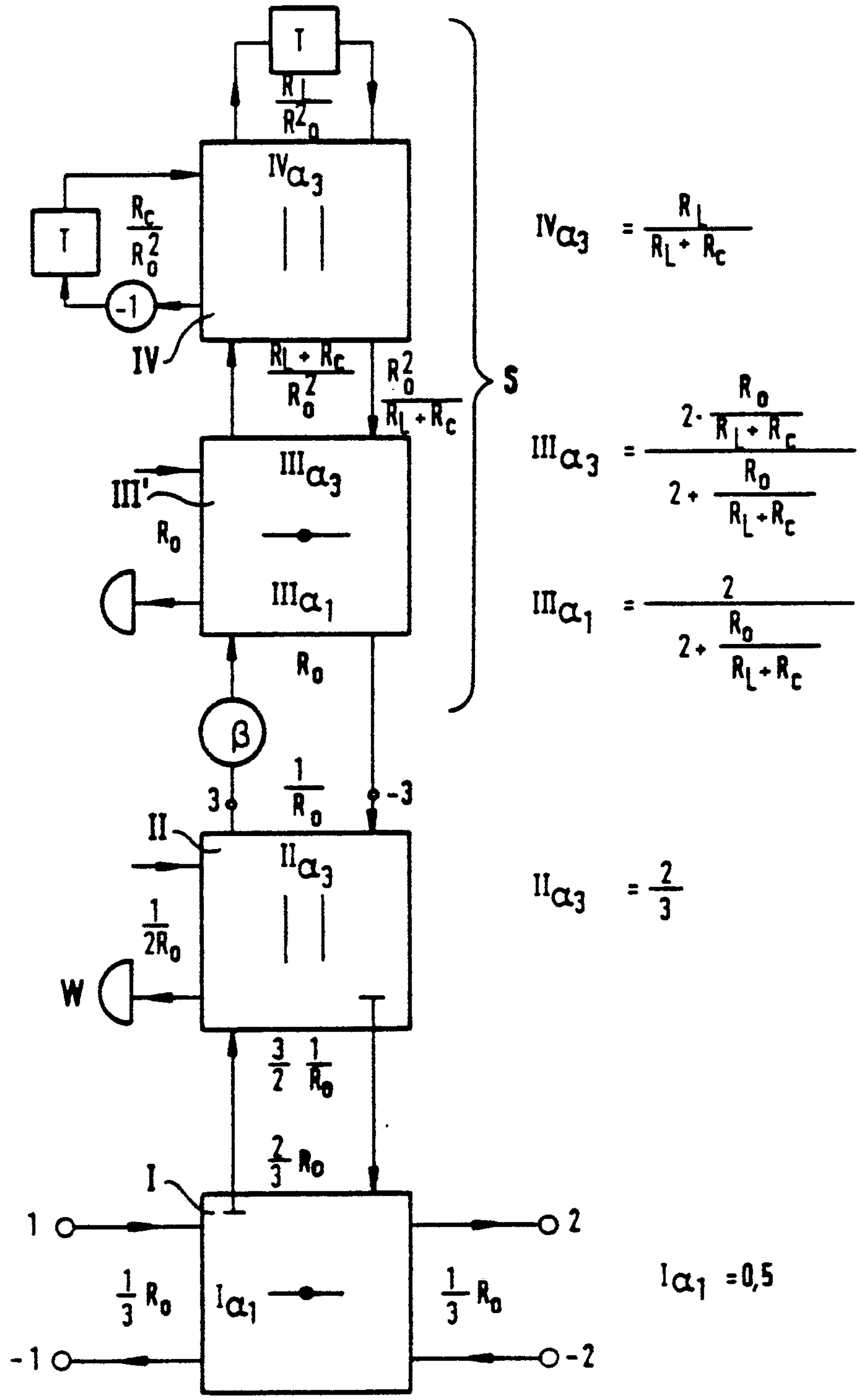


FIG. 7 Zeitdiskrete Schaltung ausgehend von $Z_2$

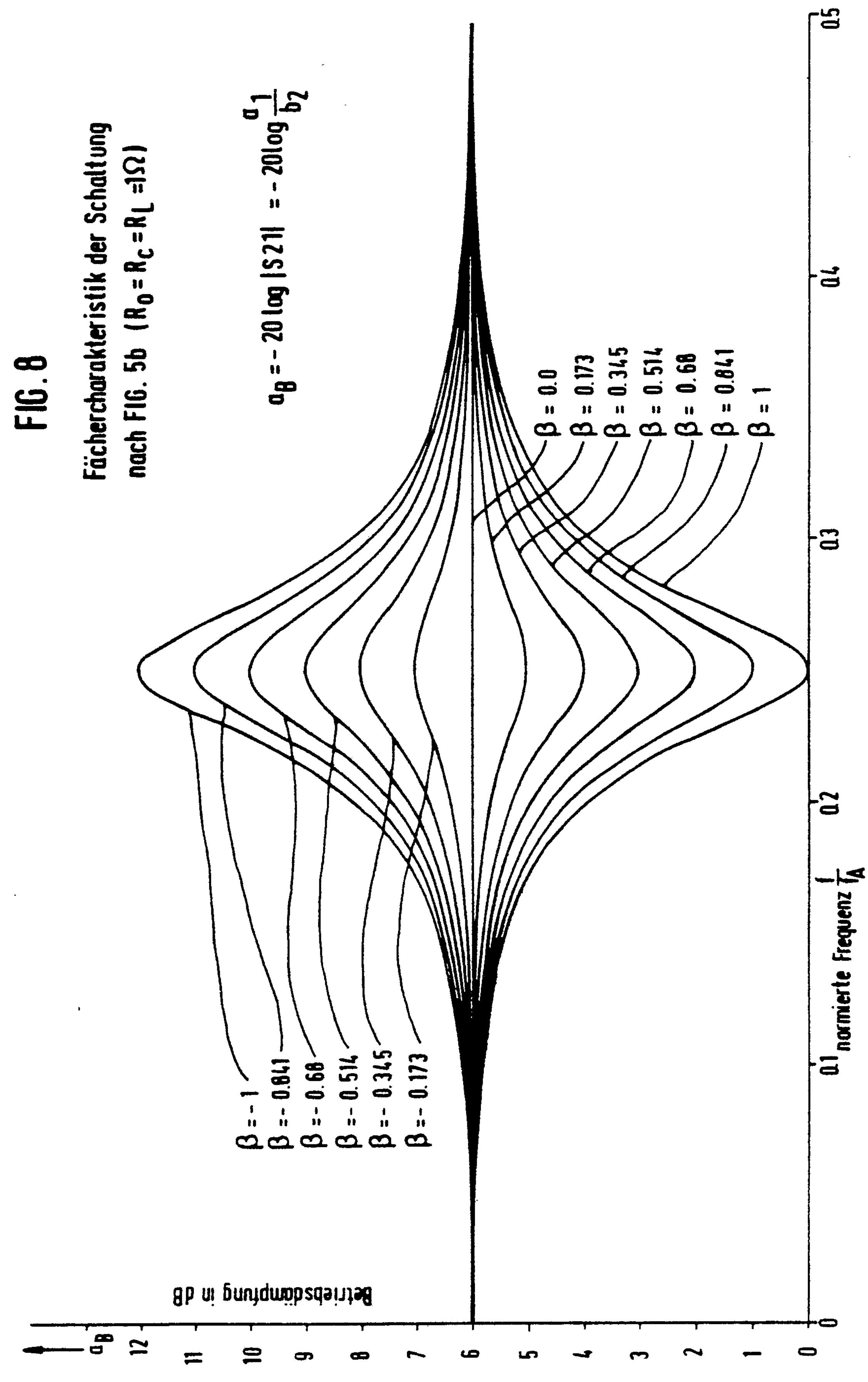
FIG. 8
Fächercharakteristik der Schaltung
nach FIG. 5b ($R_0 = R_C = R_L = 1\Omega$)
$a_B = -20 \log |S21| = -20 \log \frac{a_1}{b_2}$
β = 0.0
β = 0.173
β = 0.345
β = 0.514
β = 0.68
β = 0.841
β = 1
β = - 1
β = - 0.841
β = - 0.68
β = - 0.514
β = - 0.345
β = - 0.173
Betriebsdämpfung in dB
$a_B$
12
11
10
9
8
7
6
5
4
3
2
1
0
0
0.1
0.2
0.3
0.4
0.5
normierte Frequenz $\frac{f}{f_A}$

FIG. 9

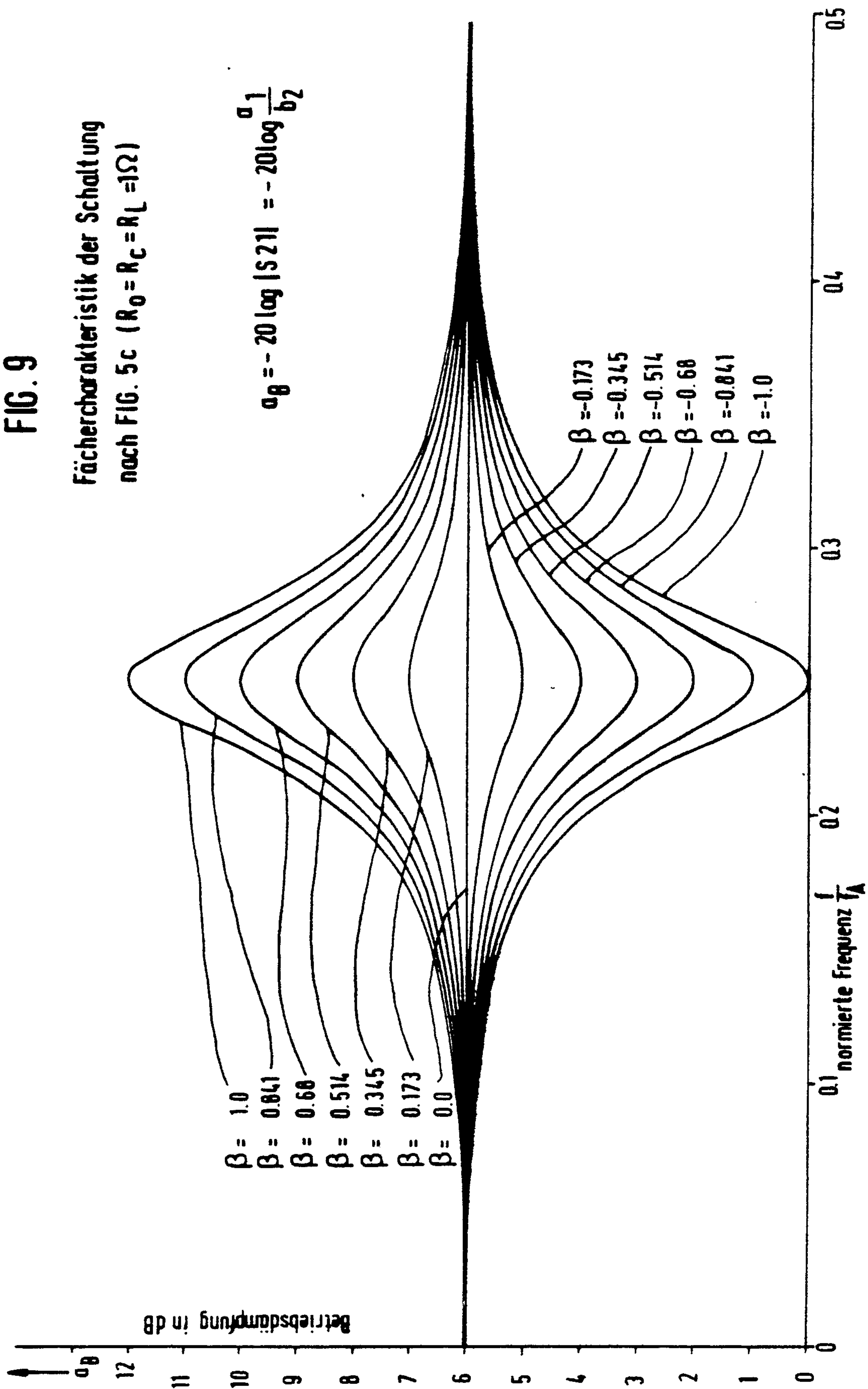
Fächercharakteristik der Schaltung
nach FIG. 5c (R0 = RC = RL = 1Ω)
aB = -20 log |S21| = -20 log a1/b2
β = 1.0
β = 0.841
β = 0.68
β = 0.514
β = 0.345
β = 0.173
β = 0.0
β = -0.173
β = -0.345
β = -0.514
β = -0.68
β = -0.841
β = -1.0
aB
Betriebsdämpfung in dB
12
11
10
9
8
7
6
5
4
3
2
1
0
0
0.1
0.2
0.3
0.4
0.5
normierte Frequenz f/fA

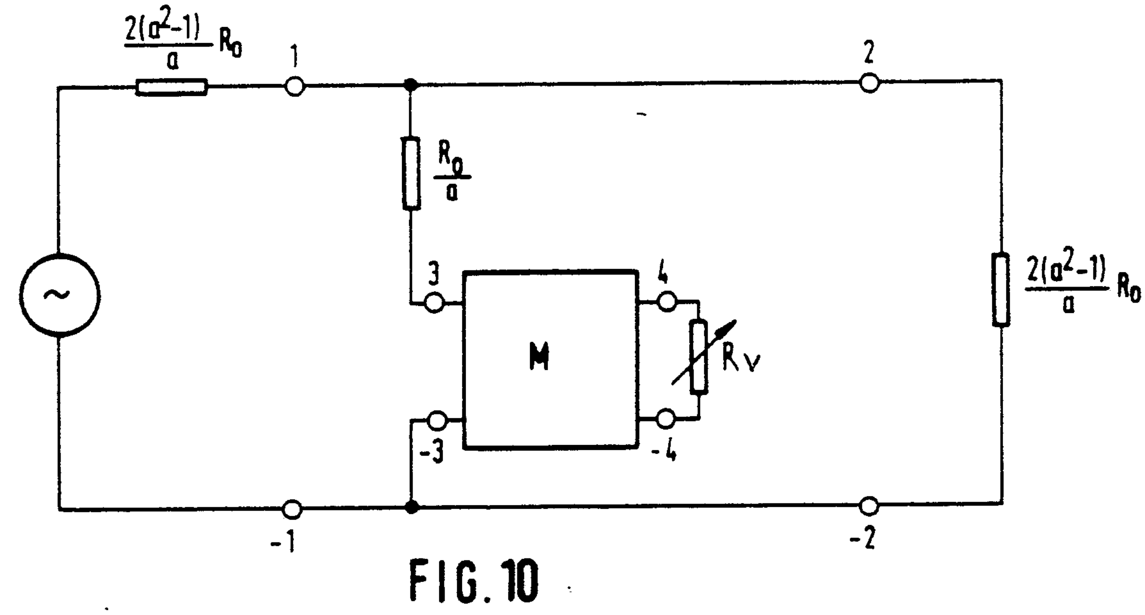


FIG. 10

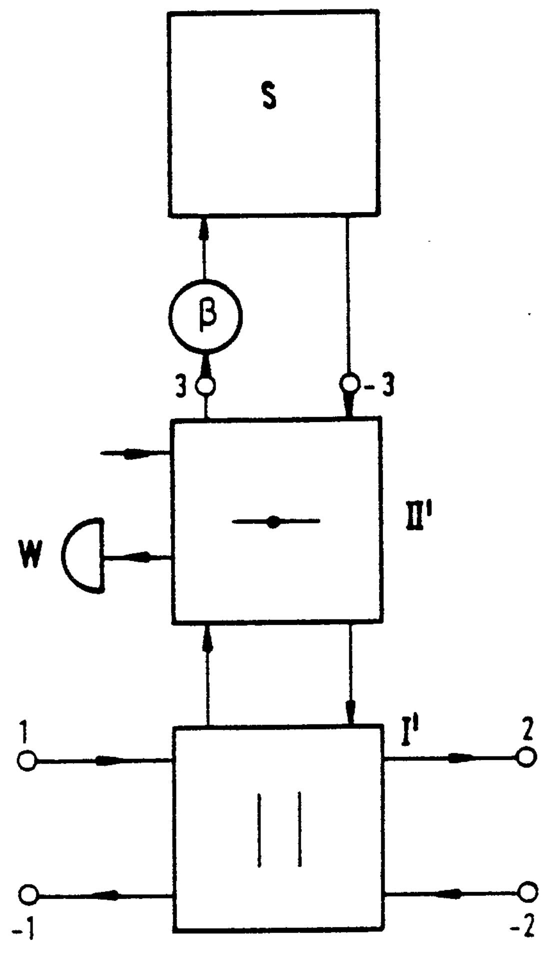


FIG. 11

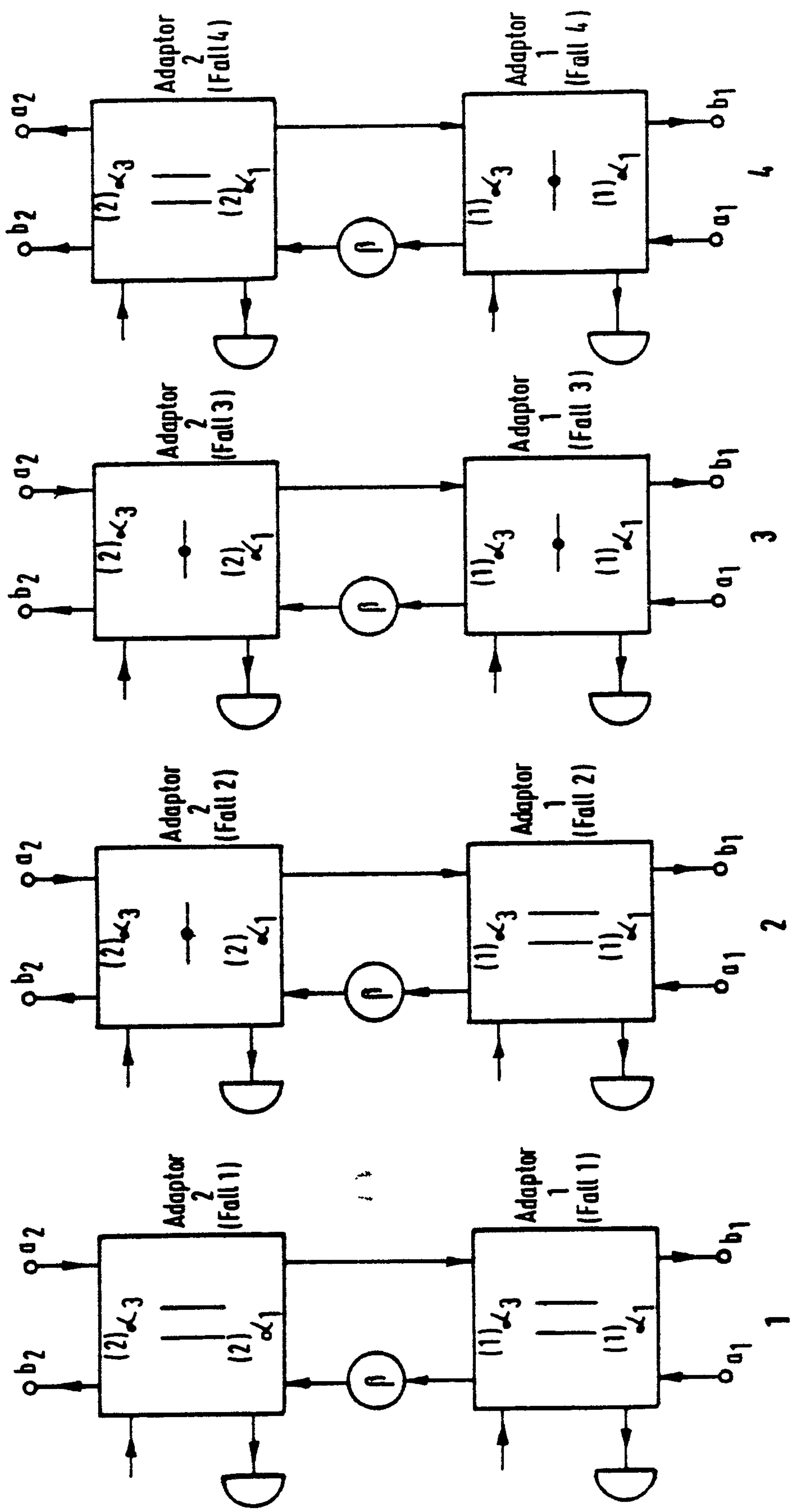
Adaptor 2 (Fall 1)
Adaptor 1 (Fall 1)
Adaptor 2 (Fall 2)
Adaptor 1 (Fall 2)
Adaptor 2 (Fall 3)
Adaptor 1 (Fall 3)
Adaptor 2 (Fall 4)
Adaptor 1 (Fall 4)
1
2
3
4

FIG. 12

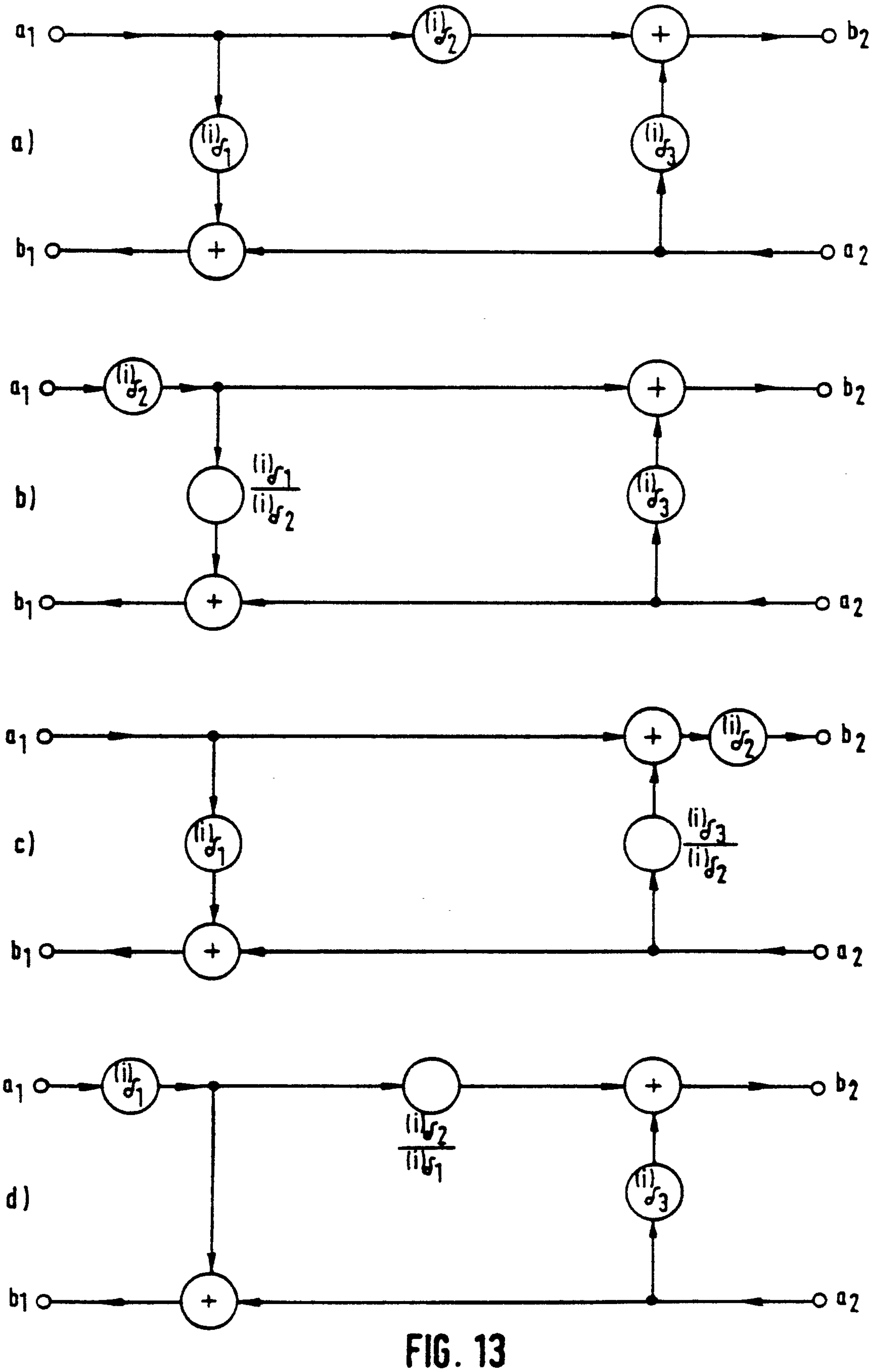


FIG. 13

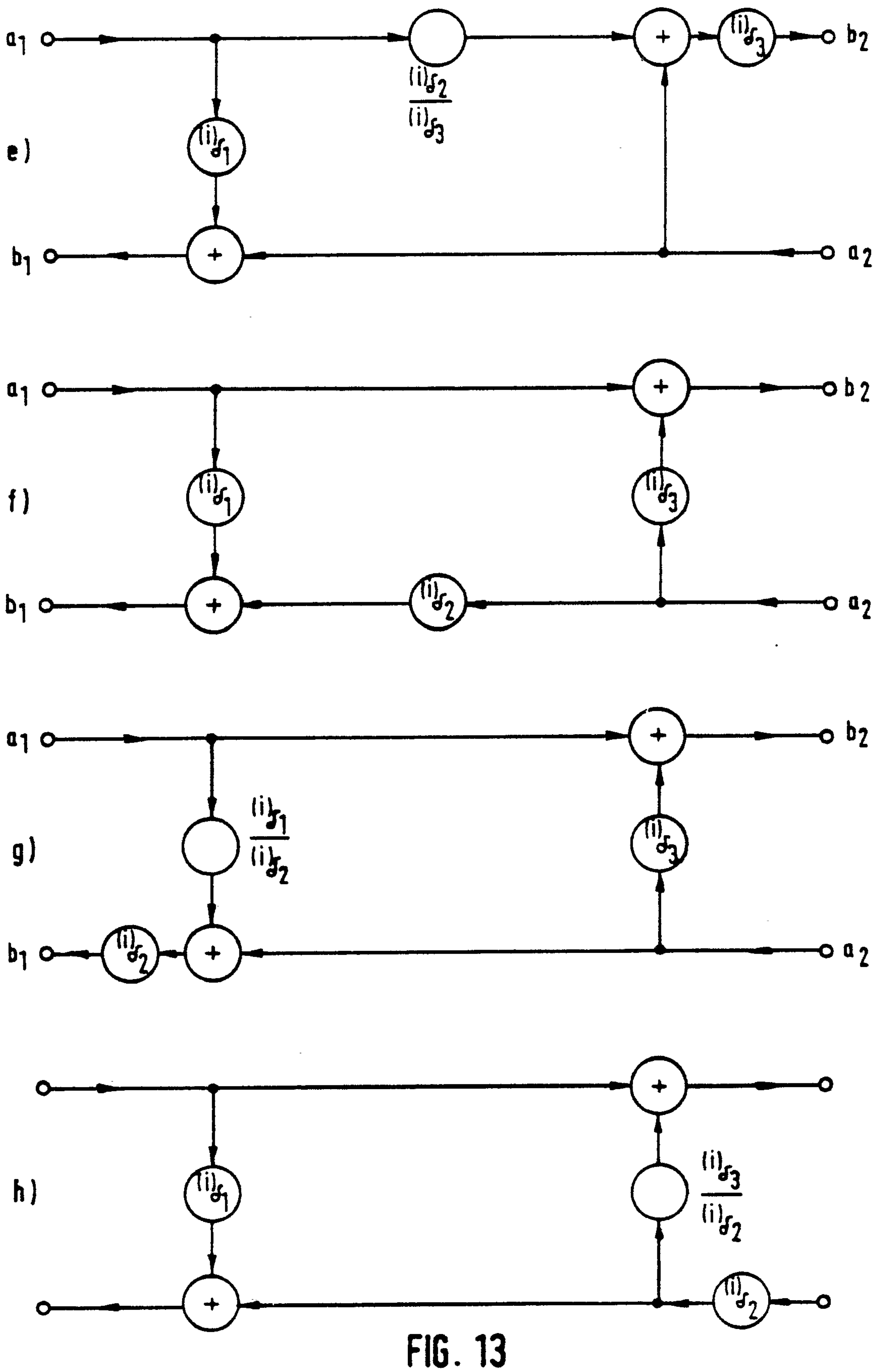
a1
b2
(i)δ2
(i)δ3
(i)δ3
e)
(i)δ1
b1
a2
a1
b2
f)
(i)δ1
(i)δ3
b1
(i)δ2
a2
a1
b2
g)
(i)δ1
(i)δ2
(i)δ3
b1
(i)δ2
a2
h)
(i)δ1
(i)δ3
(i)δ2
(i)δ2

FIG. 13

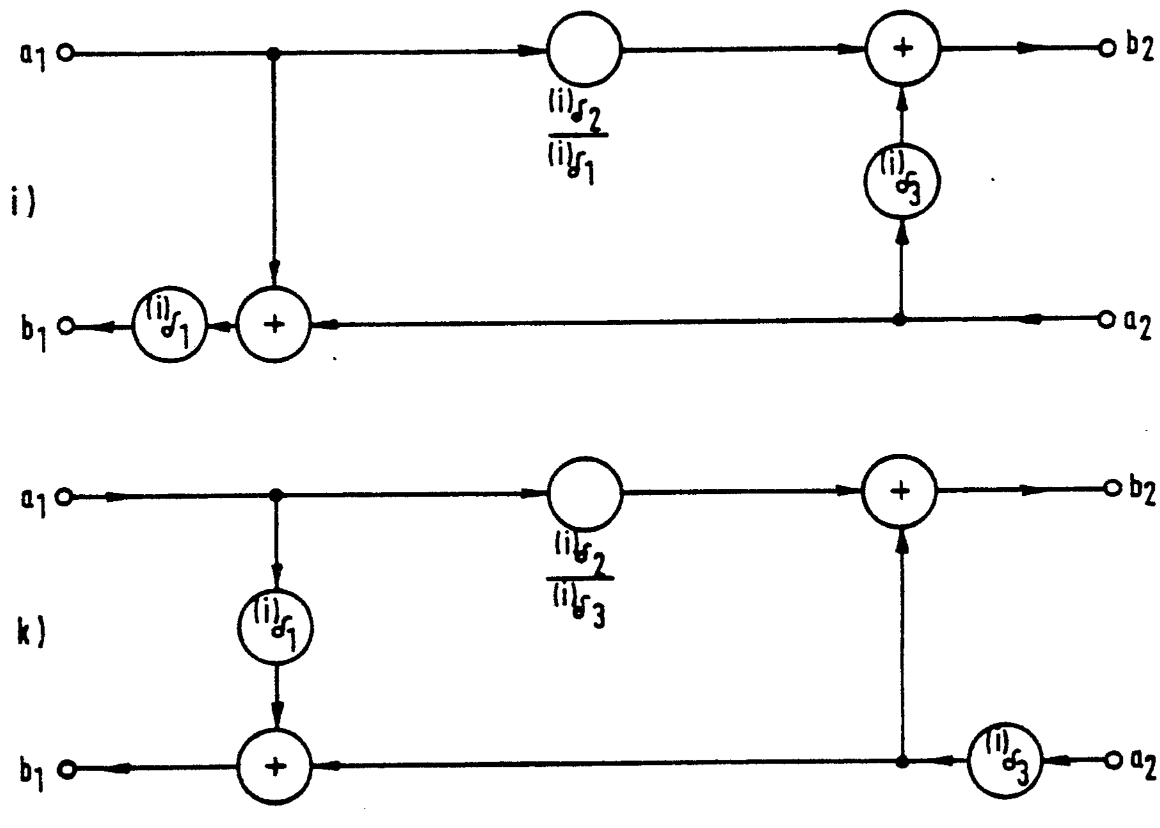


FIG. 13

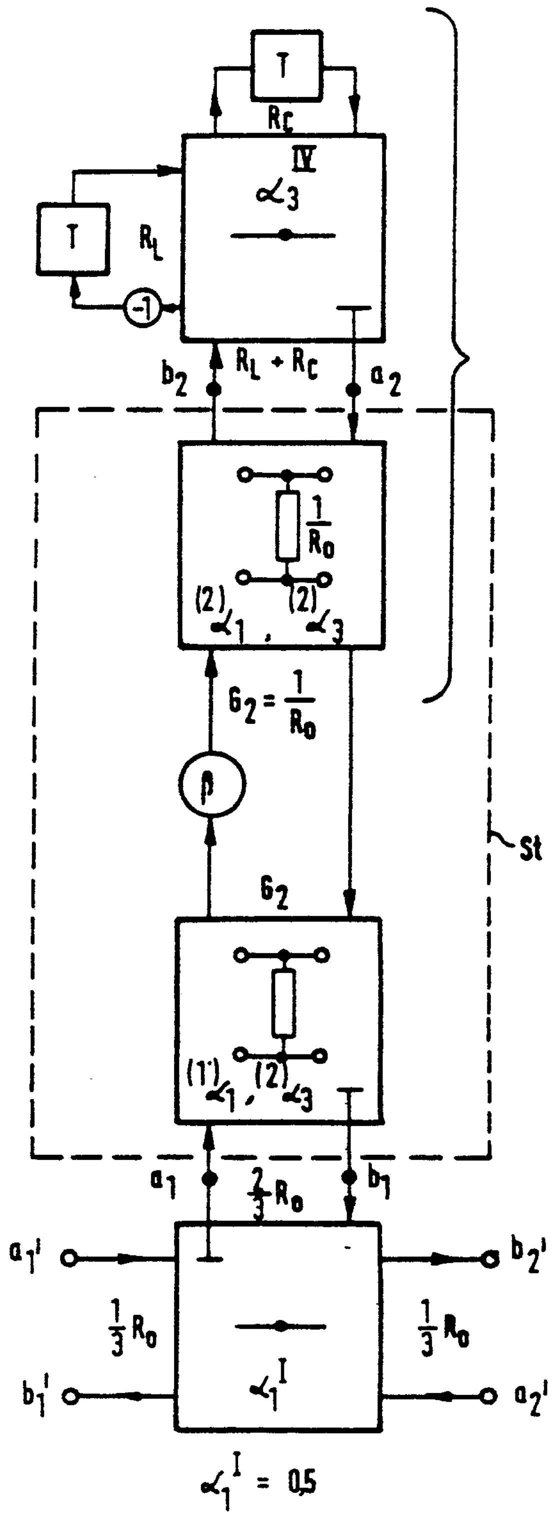


$$\alpha_3^{IV} = \frac{R_L}{R_L + R_C}$$

$$^{(2)}\alpha_1 = \frac{2}{2 + \frac{R_0}{R_L + R_C}}$$

$$^{(2)}\alpha_3 = \frac{2\,\frac{R_0}{R_L + R_C}}{2 + \frac{R_0}{R_L + R_C}}$$

$$^{(1)}\alpha_1 = 1$$

$$^{(1)}\alpha_3 = \frac{2}{3}$$

FIG. 14

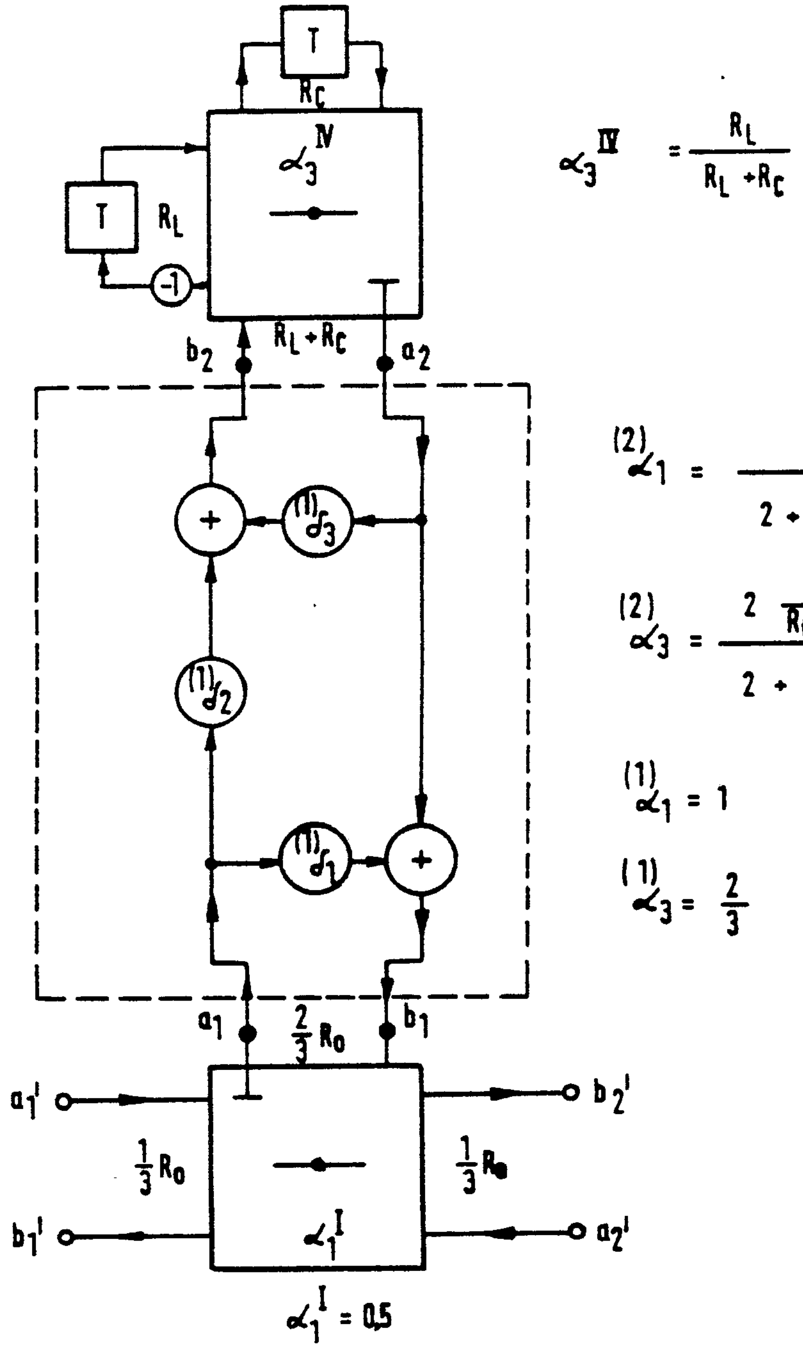


$$\alpha_3^{IV} = \frac{R_L}{R_L + R_C}$$

$$^{(2)}\alpha_1 = \frac{2}{2 + \frac{R_0}{R_L + R_C}} = \frac{4}{5}$$

$$^{(2)}\alpha_3 = \frac{2\,\frac{R_0}{R_L + R_C}}{2 + \frac{R_0}{R_L + R_C}} = \frac{2}{5}$$

$$^{(1)}\alpha_1 = 1$$

$$^{(1)}\alpha_3 = \frac{2}{3}$$

Nach Gl. 1 bis 8 :

$$^{(1)}\delta_1 = -\frac{2\beta}{15 - \beta} \qquad (-1 \le \beta \le 1)$$

$$^{(1)}\delta_2 = \frac{48\beta}{(15 - \beta)^2}$$

$$^{(1)}\delta_3 = -\frac{\beta + 9}{15 - \beta}$$

FIG. 15

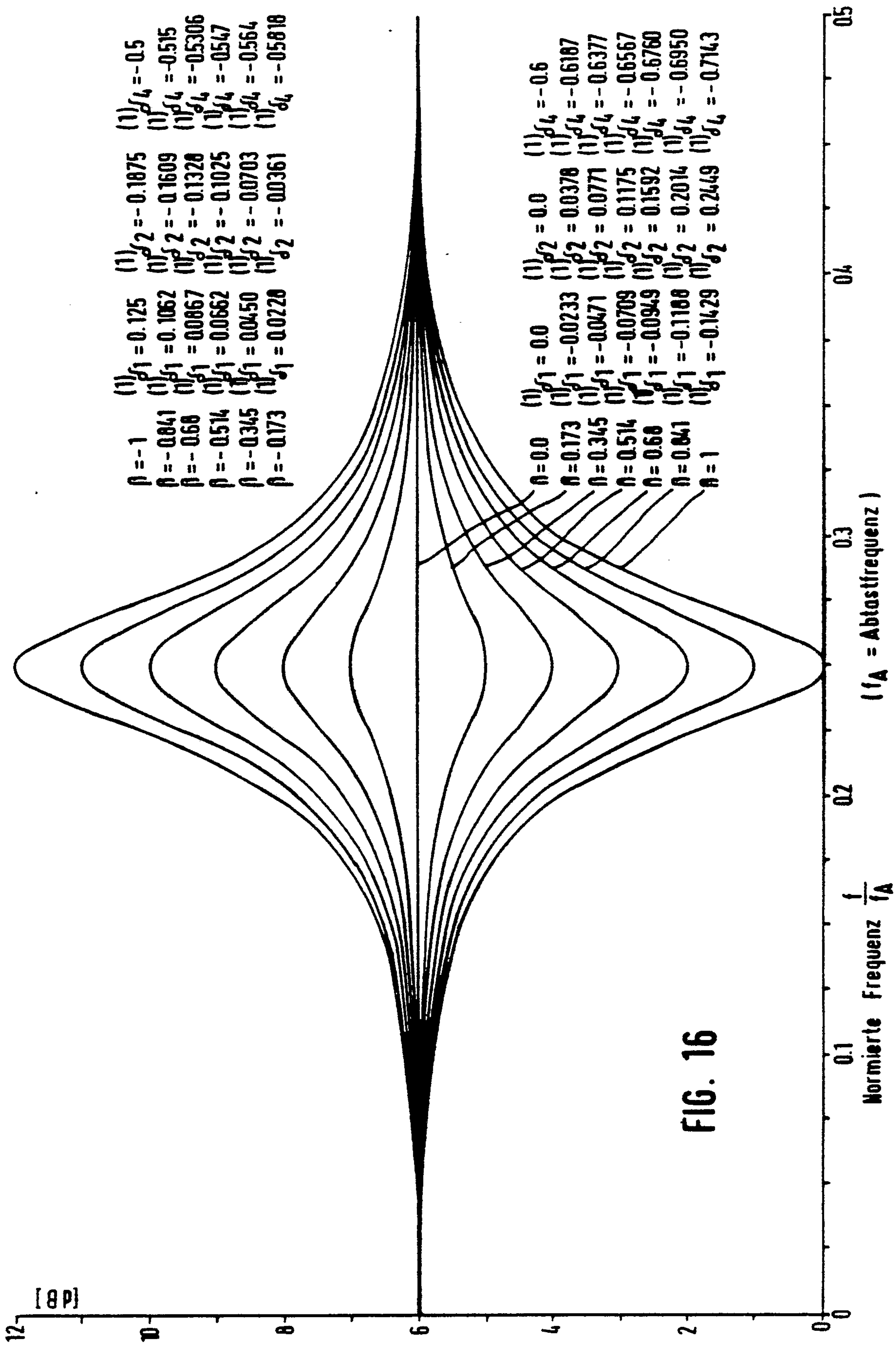
[dB]
12
10
8
6
4
2
0
0
0.1
0.2
0.3
0.4
0.5
Normierte Frequenz $\frac{f}{f_A}$ ( $f_A$ = Abtastfrequenz )
β = -1 (1)δ1 = 0.125 (1)δ2 = -0.1875 (1)δ4 = -0.5
β = -0.841 (1)δ1 = 0.1062 (1)δ2 = -0.1609 (1)δ4 = -0.515
β = -0.68 (1)δ1 = 0.0867 (1)δ2 = -0.1328 (1)δ4 = -0.5306
β = -0.514 (1)δ1 = 0.0662 (1)δ2 = -0.1025 (1)δ4 = -0.547
β = -0.345 (1)δ1 = 0.0450 (1)δ2 = -0.0703 (1)δ4 = -0.564
β = -0.173 (1)δ1 = 0.0228 (1)δ2 = -0.0361 (1)δ4 = -0.5818
β = 0.0 (1)δ1 = 0.0 (1)δ2 = 0.0 (1)δ4 = -0.6
β = 0.173 (1)δ1 = -0.0233 (1)δ2 = 0.0378 (1)δ4 = -0.6187
β = 0.345 (1)δ1 = -0.0471 (1)δ2 = 0.0771 (1)δ4 = -0.6377
β = 0.514 (1)δ1 = -0.0709 (1)δ2 = 0.1175 (1)δ4 = -0.6567
β = 0.68 (1)δ1 = -0.0949 (1)δ2 = 0.1592 (1)δ4 = -0.6760
β = 0.841 (1)δ1 = -0.1188 (1)δ2 = 0.2014 (1)δ4 = -0.6950
β = 1 (1)δ1 = -0.1429 (1)δ2 = 0.2449 (1)δ4 = -0.7143

FIG. 16